# EUROPÄISCHE PATENTSCHRIFT

(11) **EP 0 917 053 B1**
(45) Veröffentlichungstag und Bekanntmachung des Hinweises auf die Patenterteilung: **05.02.2003**
(21) Anmeldenummer: 98121228.5
(22) Anmeldetag: 06.11.1998
(51) Int. Cl.: G06F 9/445, G06F 9/24

(54) **Programmgesteuerte Einheit und Verfahren zu ihrem Betreiben**
Program controlled unit and method of operating
Unité commandée par programme et sa méthode opératoire

(30) Priorität: 18.11.1997 DE 19751093
(43) Veröffentlichungstag der Anmeldung: 19.05.1999
(73) Patentinhaber: Infineon Technologies AG, 81669 München (DE)
(72) Erfinder: Mischo, Walter, 81549 München (DE)
(74) Vertreter: Jannig, Peter, Dipl.-Ing.

(56) Entgegenhaltungen:
- US-A- 4 943 911
- US-A- 5 355 498
- US-A- 5 471 674
- J. IOANNIDIS ET AL.: "Porting AIX onto the Student Electronic Notebook" SIGSMALL/PC NOTES, Bd. 17, Nr. 3/4, 1991, Seiten 5-11, XP000329141 us

## Beschreibung

Die vorliegende Erfindung betrifft eine Vorrichtung gemäß dem Oberbegriff des Patentanspruchs 1.

Derartige programmgesteuerte Einheiten sind beispielsweise Mikroprozessoren, Mikrocontroller oder Signalprozessoren. Sie sind in der Regel dazu ausgelegt, bereits von Beginn an (von deren Einschalten oder Rücksetzen an) Programme auszuführen. Die auszuführenden Programme, genauer gesagt die diese repräsentierenden Programm-Codes, können dabei in in der programmgesteuerten Einheit vorgesehenen Programmspeichern gespeichert sein oder von außen über eine Schnittstelle zu einem externen Speicher oder eine serielle Schnittstelle in die programmgesteuerte Einheit eingelesen werden.

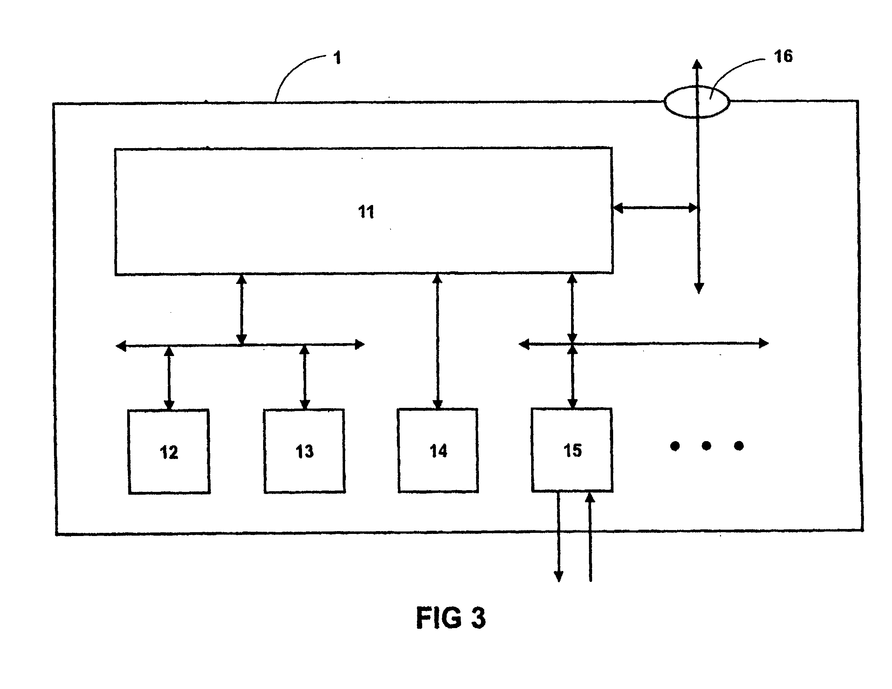

Der grundsätzliche Aufbau einer programmgesteuerten Einheit, bei welcher wahlweise alle der genannten Möglichkeiten zur Verfügung stehen, ist in Figur 3 veranschaulicht. Die dort gezeigte programmgesteuerte Einheit 1 umfaßt eine Zentraleinheit (CPU) 11, einen ersten Festspeicher in Form eines ersten ROM 12, einen zweiten Festspeicher in Form eines zweiten ROM 13, einen internen Schreib/Lesespeicher in Form eines internen RAM 14, eine (Speicher-)Schnittstelle 15 zur Verbindung der programmgesteuerten Einheit 1 mit einem in der Figur 3 nicht gezeigten externen Speicher und eine serielle Schnittstelle 16.

Das Programm, das bei der Inbetriebnahme der programmgesteuerten Einheit oder beim Rücksetzen derselben ausgeführt werden soll, kann im ersten ROM 12, im zweiten ROM 13 oder im externen Speicher gespeichert sein.

Ob bei der Inbetriebnahme der programmgesteuerten Einheit oder nach dem Rücksetzen derselben ein im ersten ROM 12, ein im zweiten ROM 13 oder ein im externen Speicher gespeichertes Programm ausführt wird, hängt davon ab, unter welchen Adressen die jeweiligen Speicher zum betreffenden Zeitpunkt ansprechbar sind. Die programmgesteuerte Einheit liest das nach deren Inbetriebnahme oder deren Rücksetzen auszuführende Programm standardmäßig von einer ganz bestimmten Adresse an aus; diese Adresse ist im betrachteten Beispiel gleich Null. Ist es das erste ROM 12, das über die Adresse 0 ansprechbar ist, so wird das Programm ausgeführt, das im ersten ROM 12 ab der durch die Adresse 0 ansprechbaren Stelle gespeichert ist; ist es das zweite ROM 13, das über die Adresse 0 ansprechbar ist, so wird das Programm ausgeführt, das im zweiten ROM 13 ab der durch die Adresse 0 ansprechbaren Stelle gespeichert ist; ist es der externe Speicher, der über die Adresse 0 ansprechbar ist, so wird das Programm ausgeführt, das im externen Speicher ab der durch die Adresse 0 ansprechbaren Stelle gespeichert ist.

Innerhalb der programmgesteuerten Einheit gespeicherte Programme sind beispielsweise die sogenannten Bootstrap-Loader. Bei einem Bootstrap-Loader handelt es sich um ein Programm, durch das veranlaßbar ist, daß über die serielle Schnittstelle 16 der programmgesteuerten Einheit 1 Programme repräsentierende Daten eingelesen, im internen RAM 14 gespeichert und schließlich aus diesem wieder ausgelesen und ausgeführt werden.

Der Bootstrap-Loader ist im betrachteten Beispiel im zweiten ROM 13 gespeichert. Damit der Bootstrap-Loader nach der Inbetriebnahme der programmgesteuerten Einheit oder deren Rücksetzen ausgeführt wird, muß dafür gesorgt werden, daß das zweite ROM 13, genauer gesagt die Stelle, ab welcher der Bootstrap-Loader dort gespeichert ist, über die Adresse 0 ansprechbar ist. Dies geschieht dadurch daß das zweite ROM 13 zumindest während der Ausführung des Bootstrap-Loaders an diejenige Stelle des durch die programmgesteuerte Einheit adressierbaren Speicherbereichs gemapt wird, bei der nach dem Einschalten oder dem Rücksetzen der programmgesteuerten Einheit mit dem Auslesen des Programm-Codes begonnen wird.

Durch das Mappen werden dem betreffenden Speicher vorübergehend bestimmte Adressen zugewiesen; bestimmte Speicherbereiche können dadurch selektiv in den durch die programmgesteuerte Einheit adressierbaren Speicherraum eingeblendet oder aus diesem ausgeblendet werden.

Soll nicht der Bootstrap-Loader, sondern ein im ersten ROM 12 oder im externen Speicher gespeichertes Programm nach der Inbetriebnahme oder dem Rücksetzen der programmgesteuerten Einheit ausgeführt werden, so muß das erste ROM 12 oder der externe Speicher durch Mappen über die Adresse 0 ansprechbar gemacht werden.

Das Mappen ist erkennbar mit einem nicht unerheblichen Verwaltungs- und Organisationsaufwand verbunden.

J. IOANNIDIS ET AL.: 'Porting AIX onto the Student Electronic Notebook' SIGSMALL/PC NOTES, Bd. 17, Nr. 3/4, 1991, Seiten 5-11, XP000329141, US, veröffentlicht eine Programmgesteuerte Einheit, die in der Lage ist, Aufgrund einer Wiederanlaufflagge ("warmstart flag") zu entscheiden, wo im Speicher die Bootbefehle gelesen werden ("primary boot code" oder "secondary boot code"). Die Entscheidung wird innerhalb des nach dem Einschalten (oder Rücksetzen) der Einheit auszuführenden Programmes getroffen. Dieses Dokument beschreibt auch, daß einer diesen möglichen Bootprogrammen (primary boot code) in einem bestimmten Speichersegment (boot sector 0 im Floppy) gespeichert ist.

Der vorliegenden Erfindung liegt daher die Aufgabe zugrunde, die programmgesteuerte Einheit gemäß dem Oberbegriff des Patentanspruchs 1 derart weiterzubilden, daß der Aufwand zur Ausführung des Bootstrap-Loaders auf ein Minimum reduzierbar ist.

Diese Aufgabe wird erfindungsgemäß durch die im kennzeichnenden Teil des Patentanspruchs 1 beanspruchten Merkmale gelöst.

Dadurch muß das nach der Inbetriebnahme oder dem Rücksetzen der programmgesteuerten Einheit auszuführende Programm nicht mehr an einer ganz bestimmten Stelle gespeichert sein. Es muß - wenn überhaupt - allenfalls an einer bestimmten Stelle innerhalb eines beliebigen Speicher-Segments gespeichert sein. Weil der Speicher in eine Vielzahl von Speicher-Segmenten unterteilbar ist, kann in diesem eine Vielzahl von nach der Inbetriebnahme oder dem Rücksetzen der programmgesteuerten Einheit auszuführenden Programmen gespeichert sein, wobei - anders als bisher - jedes dieser Programme ohne Mappen der jeweiligen Speicher-Segmente an eine bestimmte Stelle auslesbar und ausführbar ist.

Das relativ aufwendige Mappen wurde mithin durch eine individuelle Einstellung des anzusprechenden Speicher-Segments ersetzt.

Der Aufwand zur Ausführung des Bootstrap-Loaders kann dadurch auf ein Minimum reduziert werden.

Abgesehen davon erleichtert das Vorsehen der im kennzeichnenden Teil des Patentanspruchs 1 beanspruchten Merkmale den Ersatz der internen ROMs der programmgesteuerten Einheit durch sogenannte Flash-EPROMs.

Der Einsatz von Flash-EPROMs anstelle der normalen ROMs war bislang riskant, weil eine gewisse Gefahr bestand, daß der Bootstrap-Loader versehentlich gelöscht und/oder durch ein nicht ausführbares oder nicht wie gewünscht ablaufendes Programm überschrieben wird: an der Adresse, an welcher sich der Booststrap-Loader bislang befinden mußte, um nach der Inbetriebnahme oder dem Rücksetzen der programmgesteuerten Einheit ausgeführt zu werden, müssen im "normalen" Betrieb der programmgesteuerten Einheit teilweise auch bestimmte andere Informationen, Daten oder Programme wie beispielsweise Interruptvektor-Tabellen stehen. Wird der Bootstrap-Loader durch diese Informationen überschrieben, kann die programmgesteuerte Einheit nicht mehr oder jedenfalls erst nach aufwendigen Prozeduren wieder unter Ausführung des Bootstrap-Loaders gestartet werden. Ein solches Versehen kann nun mit hoher Wahrscheinlichkeit ausgeschlossen werden, weil der Bootstrap-Loader bei der erfindungsgemäßen programmgesteuerten Einheit eben nicht mehr dort gespeichert sein muß, wo im normalen Betrieb der programmgesteuerten Einheit andere Informationen, Daten oder Programme gespeichert sein müssen.

Vorteilhafte Weiterbildungen der Erfindung sind Gegenstand der Unteransprüche.

Die Erfindung betrifft auch ein Verfahren gemäß dem Patentanspruch 2.

Die Erfindung wird nachfolgend anhand eines Ausführungsbeispiels unter Bezugnahme auf die Zeichnung näher erläutert. Es zeigen
- Figur 1: schematisch den inneren Aufbau der erfindungsgemäßen programmgesteuerten Einheit,
- Figur 2: schematisch die Struktur des durch die programmgesteuerte Einheit ansprechbaren Speichers, und
- Figur 3: schematisch den inneren Aufbau einer herkömmlichen programmgesteuerten Einheit.

Bei der im folgenden näher beschriebenen programmgesteuerten Einheit handelt es sich um einen Mikrocontroller. Die Erfindung ist jedoch nicht auf Mikrocontroller beschränkt. Bei der programmgesteuerten Einheit kann es sich auch um einen Mikroprozessor, einen Signalprozessor oder dergleichen handeln.

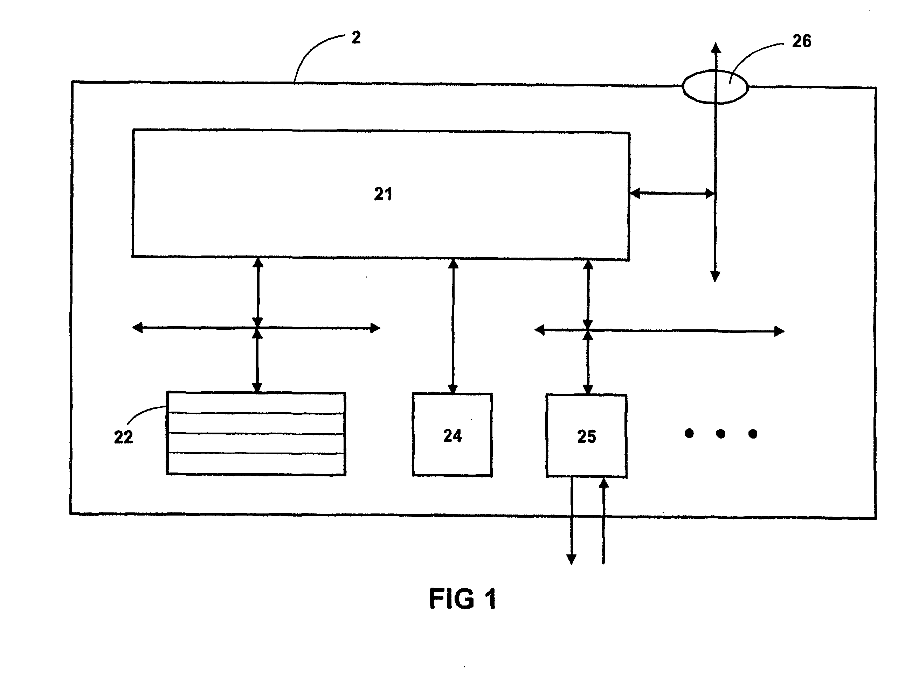

Der Mikröcontroller ist in der Figur 1 mit dem Bezugszeichen 2 bezeichnet. Er enthält unter anderem eine Zentraleinheit (CPU) 21, einen Festspeicher in Form eines Flash-EPROM 22, einen internen Schreib/Lesespeicher in Form eines internen RAM 24, eine (Speicher-)Schnittstelle 25 zur Verbindung der programmgesteuerten Einheit 2 mit einem in der Figur 1 nicht gezeigten externen Speicher und eine serielle Schnittstelle 26.

Das Flash-EPROM 22 weist im betrachteten Beispiel eine Kapazität von 128 KB auf und ist in zwei oder mehr unabhängig voneinander lösch- und/oder überschreibbare Bereiche untergliedert; wie in der Figur 1 angedeutet ist, besteht das Flash-EPROM im betrachteten Beispiel aus vier jeweils 32 KB umfassenden (unabhängig voneinander lösch- und/oder überschreibbaren) Bereichen.

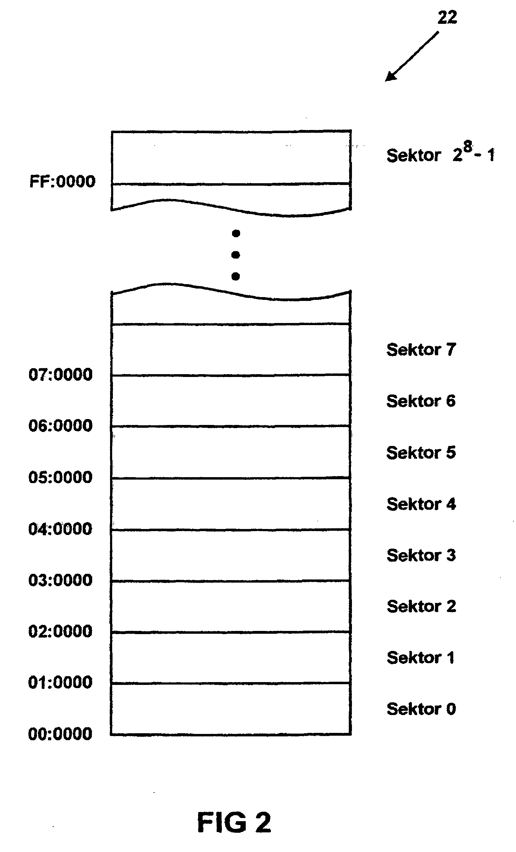

Das Flash-EPROM 22 und der externe Speicher ergeben einen Gesamtspeicher, der bei Verwendung durch die programmgesteuerte Einheit 2 wie in Figur 2 veranschaulicht strukturiert ist.

Wie aus der Figur 2 ersichtlich ist, ist der betrachtete Speicher bei Verwendung durch die programmgesteuerte Einheit 2 in bis zu 2⁸ Segmente untergliedert, wobei jedes Speicher-Segment zur Speicherung von 65536 (=64K) Worten (im betrachteten Beispiel Bytes) ausgelegt ist.

Die Adressen, über die der Speicher adressierbar ist, setzen sich aus einem acht Bit breiten Segmentzeiger SZ und einer 16 Bit breiten Intrasegmentadresse ISA zusammen und werden vorliegend SZ:ISA geschrieben. Die Intrasegmentadresse repräsentiert - wie die Bezeichnung schon andeutet - die Adresse innerhalb eines jeweiligen Speicher-Segments; der Segmentzeiger spezifiziert das Speicher-Segment, auf welches sich die Intrasegmentadresse bezieht.

Von den 2⁸ Speicher-Segmenten können beispielsweise die ersten beiden Speicher-Segmente, d.h. die Speicher-Segmente mit den Ordnungsnummern 0 und 1 durch das interne Flash-EPROM 22, und die restlichen Speicher-Segmente, d.h. die Speicher-Segmente mit den Ordnungsnummern 2 bis 2⁸-1 durch den externen Speicher gebildet werden.

Die programmgesteuerte Einheit 2, genauer gesagt deren CPU 21 ist dazu ausgelegt, von Beginn an, d.h. unmittelbar nach der Inbetriebnahme oder dem Rücksetzen der programmgesteuerten Einheit Programme auszuführen.

Das Programm, das bei der Inbetriebnahme der programmgesteuerten Einheit oder beim Rücksetzen derselben ausgeführt werden soll, ist entweder im Flash-EPROM 22 oder im externen Speicher gespeichert.

Ob bei der Inbetriebnahme der programmgesteuerten Einheit oder nach dem Rücksetzen derselben ein im Flash-EPROM 22 oder ein im externen Speicher gespeichertes Programm ausgeführt wird, hängt vom Wert des Segmentzeigers ab. Anders als bisher wird nicht der das auszuführende Programm enthaltende Speicherbereich an eine bestimmte Stelle gemapt, sondern der Segmentzeiger so eingestellt, daß dadurch das Speicher-Segment ausgewählt wird, in welchem das auszuführende Programm gespeichert ist.

Vorzugsweise sind die Programme, die für eine Ausführung nach der Inbetriebnahme oder einem Rücksetzen der programmgesteuerten Einheit in Frage kommen, in den jeweiligen Segmenten ab der selben Intrasegmentadresse gespeichert. Sie liegen "nur" in verschiedenen Speicher-Segmenten, weisen also "nur" verschiedene Segmentzeiger in ihren Adressen auf. Die verschiedenen Segmentzeiger unterscheiden sich dabei vorzugsweise möglichst wenig (am besten nur in einem Bit) voneinander. Dann kann allein durch Veränderung eines oder einiger weniger Bits des Segmentzeigers festgelegt werden, welches Programm nach der Inbetriebnahme oder dem Rücksetzen der programmgesteuerten Einheit auszuführen ist.

Die programmgesteuerte Einheit ist im betrachteten Beispiel so ausgelegt, daß der Segmentzeiger und die Intrasegmentadresse nach der Inbetriebnahme oder dem Rücksetzen der programmgesteuerten Einheit standardmäßig den Werc 0 haben, und daß der Segmentzeiger auf externe Veranlassung hin nach der Inbetriebnahme oder dem Rücksetzen der programmgesteuerten Einheit auf einen anderen Wert (beispielsweise 2) gesetzt werden kann.

Die externe Veranlassung besteht im betrachteten Beispiel darin, daß beim Einschalten und Rücksetzen der programmgesteuerten Einheit ein bestimmtes Signal an einen oder mehrere Pins der programmgesteuerten Einheit angelegt wird. Dieser Umstand kann von einer Auswertelogik zweifelsfrei erkannt und zum Anlaß genommen werden, den standardmäßigen Wert des Segmentzeigers beizubehalten oder auf bestimmte Weise zu verändern.

Wird ein nach dem Einschalten und Rücksetzen der programmgesteuerten Einheit standardmäßig den Wert 0 aufweisender Segmentzeiger mangels entsprechender Anweisungen unverändert beibehalten, so wird das Programm ausgeführt, das im Speicher-Segment 0 ab der Intrasegmentadresse 0, also im ersten Speicher-Segment des Flash-EPROM 22 gespeichert ist; wird der Segmentzeiger auf externe Veranlassung hin auf den Wert 2 gesetzt, so wird das Programm ausgeführt, das im Speicher-Segment 2 ab der Intrasegmentadresse 0, also im ersten Speicher-Segment externen Speichers gespeichert ist.

Wäre der über die programmgesteuerte Einheit ansprechbare Speicher so strukturiert, daß die Speicher-Segmente mit den Ordnungsnummern 1 und 2 durch das Flash-EPROM 22 und die Speicher-Segmente mit den Ordnungsnummern 0 und 3 bis 2⁸-1 durch den externen Speicher realisiert wären, so würde - bei ansonsten unveränderten Bedingungen - nach der Inbetriebnahme oder dem Rücksetzen der programmgesteuerten Einheit standardmäßig ein im externen Speicher gespeichertes Programm und auf externe Veranlassung hin ein im zweiten Segment des Flash-EPROM 22 gespeichertes Programm ausgeführt werden.

Daß ein durch ein Flash-EPROM gebildetes Speicher-Segment, das ein nach der Inbetriebnahme und/oder dem Rücksetzen der programmgesteuerten Einheit auszuführendes Programm enthält, nicht das Speicher-Segment mit der Ordnungsnummer 0 ist, erweist sich als besonders günstig. Dann ist nämlich die Wahrscheinlichkeit, daß dieses Programm versehentlich gelöscht und/oder überschrieben wird, äußerst gering. Der in der Praxis häufig vorkommende Versuch, an den Speicheranfang Interruptvektor-Tabellen oder sonstige Daten oder Programme zu schreiben, kann jedenfalls nicht zur Folge haben, daß das nach der Inbetriebnahme oder dem Rücksetzen der programmgesteuerten Einheit auszuführende Programm versehentlich gelöscht und/oder überschrieben wird. Dies gilt erst recht, wenn das Flash-EPROM 22 wie vorliegend zwei oder mehr Segmente des durch die programmgesteuerte Einheit adressierbaren Speichers belegt, und wenn das nach der Inbetriebnahme oder dem Rücksetzen der programmgesteuerten Einheit auszuführende Programm nicht im ersten, sondern im zweiten oder einem noch weiter hinten liegenden Segment des Flash-EPROM gespeichert ist.

Bei dem im Flash-EPROM 22 gespeicherten, nach der Inbetriebnahme oder dem Rücksetzen der programmgesteuerten Einheit auszuführenden Programm handelt es sich im betrachteten Beispiel um einen Bootstrap-Loader. Der Schutz des Bootstrap-Loaders vor einem versehentlichen Löschen und/oder Überschreiben ist besonders wichtig, weil es ohne Bootstrap-Loader mitunter äußerst schwierig sein kann, das die programmgesteuerte Einheit enthaltende System bestimmungsgemäß in Betrieb zu setzen und/oder zu betreiben. Dies ist insbesondere dann der Fall, wenn im internen Speicher der programmgesteuerten Einheit kein Programm mehr vorhanden ist, das sich zur Ausführung nach der Inbetriebnahme oder dem Rücksetzen der programmgesteuerten Einheit eignet und/oder wenn - abweichend vom vorliegend betrachteten Ausführungsbeispiel - kein externer Speicher vorgesehen ist.

Beim vorstehend betrachteten Beispiel kann ein nach der Inbetriebnahme oder dem Rücksetzen der programmgesteuerten Einheit auszuführendes Programm an zwei verschiedenen Stellen gespeichert sein. Die Beschränkung auf zwei mögliche Stellen ist insofern vorteilhaft, als eine gegebenenfalls durchzuführende Segmentzeiger-Änderung mit minimalem Aufwand durchgeführt werden kann; es reicht aus, nur ein einziges Bit des Segmentzeigers umzuschalten. Nichtsdestotrotz ist es jedoch möglich, nach der Inbetriebnahme oder dem Rücksetzen der programmgesteuerten Einheit auszuführende Programme an mehr als zwei Stellen zu speichern und durch eine dann zwar aufwendigere, aber dennoch problemlos durchführbare Segmentzeiger-Änderung zur Ausführung zu bringen.

Im beschriebenen Ausführungsbeispiel weist die Intrasegmentadresse nach der Inbetriebnahme oder dem Rücksetzen der programmgesteuerten Einheit jeweils den Wert 0 auf. Dies erweist sich als günstig, weil die Adresse, von welcher Bootstrap-Loader oder andere nach der Inbetriebnahme oder dem Rücksetzen der programmgesteuerten Einheit auszuführende Programme in herkömmlichen programmgesteuerten Einheiten geholt werden, standardmäßig ebenfalls die Adresse 0 ist. Gleichwohl kann aber auch jede andere Adresse als 0 gewählt werden. Im betrachteten Beispiel, wo das Flash-EPROM pro Speicher-Segment jeweils mehrere unabhängig voneinander löschund/oder überschreibbare Untersegmente aufweist, besteht eine sinnvolle Alternative beispielsweise darin, das nach der Inbetriebnahme oder dem Rücksetzen der programmgesteuerten Einheit auszuführende Programm an den Anfang eines zweiten oder weiter hinten liegenden Untersegmentes eines jeweiligen Speicher-Segmentes zu speichern.

Unabhängig von den Einzelheiten der praktischen Realisierung wurde eine programmgesteuerte Einheit gefunden, bei dem der Aufwand zur Auswahl und zur Ausführung eines nach der Inbetriebnahme oder dem Rücksetzen der programmgesteuerten Einheit auszuführenden Programmes wie beispielsweise eines Bootstrap-Loaders auf ein Minimum reduzierbar ist.

### Bezugszeichenliste

- 1: programmgesteuerte Einheit
- 2: programmgesteuerte Einheit

- 11: CPU
- 12: erstes ROM
- 13: zweites ROM
- 14: internes RAM
- 15: Schnittstelle zum externen Speicher
- 16: serielle Schnittstelle

- 21: CPU
- 22: Flash-EPROM
- 24: internes RAM
- 25: Schnittstelle zum externen Speicher
- 26: serielle Schnittstelle

## Patentansprüche

1. Programmgesteuerte Einheit (2), die aus einem verfügbaren Speicher (22, 24) unter Verwendung eines Segmentzeigers einzelne Segmente (Sektor 0-Sektor 2⁸-1) zur Verwendung auswählt,
**dadurch gekennzeichnet,**
**daß** der Inhalt des Segmentzeigers auf externe Veranlassung hin bereits vor Beginn der Ausführung des nach dem Einschalten oder Rücksetzen der programmgesteuerten Einheit (2) auszuführenden Programms verändert werden kann.

2. Verfahren zum Betreiben einer programmgesteuerte Einheit (2), die aus einem verfügbaren Speicher (22,24) unter Verwendung eines Segmentzeigers einzelne Segmente (Sektor 0 - Sektor 2⁸-1) zur Verwendung auswählt,
**dadurch gekennzeichnet,**
**daß** der Inhalt des Segmentzeigers auf externe Veranlassung hin vor der Ausführung eines Bootstrap-Ladevorganges verändert wird.

3. Programmgesteuerte Einheit (2) nach Anspruch 1,
**dadurch gekennzeichnet,**
**daß** die Speicher-Segmente (Sektor 0 - Sektor 2⁸-1) zumindest teilweise durch einen internen Speicher (22,24) der programmgesteuerten Einheit gebildet werden.

4. Programmgesteuerte Einheit (2) nach Anspruch 3,
**dadurch gekennzeichnet,**
**daß** der interne Speicher (22,24) der programmgesteuerten Einheit (2) die Speicher-Segmente mit der Ordnungsnummer 2 und/oder größer bildet.

5. Programmgesteuerte Einheit (2) nach Anspruch 3 oder 4,
**dadurch gekennzeichnet,**
**daß** der interne Speicher (22,24) der programmgesteuerten Einheit (2) ein Flash-EPROM (22) ist.

6. Programmgesteuerte Einheit (2) nach einem oder mehreren der Ansprüche 3 bis 5,
**dadurch gekennzeichnet,**
**daß** der zur Durchführung des Bootstrap-Ladevorganges auszuführende Bootstrap-Loader im internen Speicher (22,24) der programmgesteuerten Einheit (2) gespeichert ist.

7. Programmgesteuerte Einheit (2) nach Anspruch 6,
**dadurch gekennzeichnet,**
**daß** der Bootstrap-Loader im zweiten oder einem weiter hinten liegenden Speicher-Segment des internen Speichers gespeichert ist.

8. Programmgesteuerte Einheit (2) nach einem oder mehreren der vorhergehenden Ansprüche,
**dadurch gekennzeichnet,**
**daß** die programmgesteuerte Einheit (2) dazu ausgelegt ist, den Inhalt des Segmentzeigers bei deren Inbetriebnahme oder Rücksetzen so zu verändern, daß durch den veränderten Segmentzeiger dasjenige Speicher-Segment ausgewählt wird, in welchem der Bootstrap-Loader gespeichert ist.

9. Programmgesteuerte Einheit (2) nach Anspruch 8,
**dadurch gekennzeichnet,**
**daß** der Segmentzeiger des Speicher-Segments, in welchem der Bootstrap-Loader gespeichert ist, sich vom Segmentzeiger des nach der Inbetriebnahme oder dem Rücksetzen der programmgesteuerten Einheit standardmäßig ausgewählten Speicher-Segments in möglichst wenigen Bits unterscheidet.

10. Programmgesteuerte Einheit (2) nach einem oder mehreren der vorhergehenden Ansprüche,
**dadurch gekennzeichnet,**
**daß** die programmgesteuerte Einheit (2) ein Mikroprozessor, ein Mikrocontroller oder ein Signalprozessor ist.

## Claims

1. Program-controlled unit (2) which selects individual segments (sector 0 - sector 2⁸-1) for use from an available memory (22, 24) using a segment pointer, **characterized in that** the content of the segment pointer can be changed, initiated externally, even before the start of the execution of the program which is to be carried out after the switching on or resetting of the program-controlled unit (2).

2. Method for operating a program-controlled unit (2) which selects individual segments (sector 0 - sector 2⁸-1) for use from an available memory (22, 24) using a segment pointer, **characterized in that** the contents of the segment pointer are changed, initiated externally, before the execution of a bootstrap loading operation.

3. Program-controlled unit (2) according to Claim 1, **characterized in that** the memory segments (sector 0 - sector 2⁸-1) are formed partially by an internal memory (22, 24) of the program-controlled unit.

4. Program-controlled unit (2) according to Claim 3, **characterized in that** the internal memory (22, 24) of the program-controlled unit (2) forms the memory segments with the ordinal number 2 and/or above.

5. Program-controlled unit (2) according to Claim 3 or 4, **characterized in that** the internal memory (22, 24) of the program-controlled unit (2) is a flash EPROM (22).

6. Program-controlled unit (2) according to one or more of Claims 3 to 5, **characterized in that** the bootstrap loader which is to be executed in order to carry out the bootstrap loading process is stored in the internal memory (22, 24) of the program-controlled unit (2).

7. Program-controlled unit (2) according to Claim 6, **characterized in that** the bootstrap loader is stored in the second or in a subsequent memory segment of the internal memory.

8. Program-controlled unit (2) according to one or more of the preceding claims, **characterized in that** the program-controlled unit (2) is configured to change the contents of the segment pointer when said program-controlled unit (2) is started up or reset in such a way that the changed segment pointer selects that memory segment in which the bootstrap loader is stored.

9. Program-controlled unit (2) according to Claim 8, **characterized in that** the segment pointer of the memory segment in which the bootstrap loader is stored differs, in terms of the smallest possible number of bits, from the segment pointer of the memory segment which is selected according to standard practice after the starting up or the resetting of the program-controlled unit.

10. Program-controlled unit (2) according to one or more of the preceding claims, **characterized in that** the program-controlled unit (2) is a microprocessor, a microcontroller or a signal processor.

## Revendications

1. Unité programmable (2) qui sélectionne chacun des segments (secteur 0 - secteur 2⁸-1) en vue de son utilisation dans une mémoire (22, 24) disponible en utilisant un indicateur de segment, **caractérisé en ce que** le contenu de l'indicateur de segment peut être modifié par une commande externe déjà avant de commencer l'exécution du programme à exécuter après la mise en service ou la réinitialisation de l'unité programmable (2).

2. Procédé pour faire fonctionner une unité programmable (2) qui sélectionne chacun des segments (secteur 0 - secteur 2⁸-1) en vue de son utilisation dans une mémoire (22, 24) disponible en utilisant un indicateur de segment, **caractérisé en ce que** le contenu de l'indicateur de segment (1) est modifié avant l'exécution d'un programme d'initialisation.

3. Unité programmable (2) selon la revendication 1, **caractérisé en ce que** les segments de mémoire (secteur 0 - secteur 2⁸-1) sont formés au moins en partie par une mémoire interne (22, 24) de l'unité programmable.

4. Unité programmable (2) selon la revendication 3, **caractérisé en ce que** la mémoire interne (22, 24) de l'unité programmable (2) constitue les segments de mémoire ayant pour numéro d'ordre 2 et/ou plus.

5. Unité programmable (2) selon la revendication 3 ou 4, **caractérisé en ce que** la mémoire interne (22, 24) de l'unité programmable (2) est une EPROM flash (22).

6. Unité programmable (2) selon une ou plusieurs des revendications 3 à 5, **caractérisé en ce que** le programme d'initialisation à exécuter pour réaliser le processus de démarrage est enregistré dans la mémoire interne (22, 24) de l'unité programmable (2).

7. Unité programmable (2) selon la revendication 6, **caractérisé en ce que** le programme d'initialisation est enregistré dans le deuxième segment de mémoire de la mémoire interne ou dans un segment de mémoire plus en arrière.

8. Unité programmable (2) selon une ou plusieurs des revendications précédentes, **caractérisé en ce que** l'unité programmable (2) est conçue pour modifier le contenu de l'indicateur de segment lors de sa mise en service ou de sa réinitialisation de manière à ce que l'indicateur de segment modifié entraîne la sélection du segment de mémoire dans lequel est enregistré le programme d'initialisation.

9. Unité programmable (2) selon la revendication 8, **caractérisé en ce que** l'indicateur de segment du segment de mémoire dans lequel est enregistré le programme d'initialisation se différencie du moins de bits possible du segment de mémoire sélectionné par défaut après la mise en service ou la réinitialisation de l'unité programmable.

10. Unité programmable (2) selon une ou plusieurs des revendications précédentes, **caractérisé en ce que** l'unité programmable (2) est un microprocesseur, un microcontrôleur ou un processeur de signal.
